# EUROPEAN PATENT APPLICATION

(11) **EP 2 503 759 A1**
(43) Date of publication of application: **26.09.2012**
(21) Application number: 10835490.3
(22) Date of filing: 09.12.2010
(51) Int. Cl.: H04L 29/08

(54) **METHOD, APPARATUS AND CACHE SYSTEM FOR PROVIDING FILE DOWNLOADING SERVICE**

(30) Priority: 09.12.2009 CN 200910259172
(71) Applicant: Chengdu Huawei Symantec Technologies Co., Ltd, Sichuan 611731 (CN)
(72) Inventor: ZHOU, Shuguo, Sichuan 611731 (CN); LAN, Gang, Sichuan 611731 (CN); GONG, Chen, Sichuan 611731 (CN); WANG, Rui, Sichuan 611731 (CN)
(74) Representative: Körber, Martin Hans
(86) International application number: PCT/CN2010/079590
(87) International publication number: WO 2011/069455

(57) **Abstract**

Embodiments of the present invention disclose a method for providing a file download service, where the method includes: receiving a download request from a client, where the download request includes a target URL and information about a name of a file to be downloaded; pre-obtaining part of bytes of the file to be downloaded from a target website according to the target URL and the information about the name of the file to be downloaded, which are in the download request, and a preset pre-obtaining rule; obtaining a Hash value through performing Hash processing on the pre-obtained part of bytes of the file to be downloaded; and providing the file to be downloaded for the client when a same Hash value is found in a preset buffered file information list. This method effectively reduces the number of times for repeatedly downloading the file to be downloaded, saves storage space in the buffering system, and reduces egress traffic and bandwidth consumption.

## Description

This application claims priority to Chinese Patent Application No. 200910259172.X, filed with the Chinese Patent Office on December 9, 2009, and entitled "Method and Apparatus for Providing File Download Service, and Buffering System", which is hereby incorporated by reference in its entirety.

### FIELD OF THE INVENTION

The present invention relates to the field of communications technologies, and in particular, to a method and an apparatus for providing a file download service, and a buffering system.

### BACKGROUND OF THE INVENTION

With the development of the Internet technology, a buffering system technology develops rapidly. Currently, the development of a content buffering technology has undergone several phases, including web page buffering, content distribution network, P2P buffering, HTTP video share/P2SP download buffering, and buffering based on unique applications. An HTTP buffering system meets HTTP download requirements of users, and at the same time, reduces egress traffic, and improves a download speed of users by managing and controlling HTTP download traffic, pre-buffering HTTP download resources locally, and guiding intranet users to preferably obtain local HTTP download traffic.

In the process of researching and practicing the prior art, the inventor finds that: When providing a file download service, an existing HTTP buffering system mainly relies on a URL (Uniform Resource Locator, uniform resource locator, that is, web page address) and a file name to judge whether a corresponding target file is stored in the buffering system, thus determining whether to use a buffered file in the buffering system to provide the download service for intranet users. When releasing files of the same content, different sites use different URLs and file names are often different. Therefore, purely relying on the combination of the URL and file name often cannot accurately judge uniqueness of a buffered file in the buffering system, which results in the case where a same file is buffered multiple times in the buffering system and wastes huge storage space and download traffic.

### SUMMARY OF THE INVENTION

Embodiments of the present invention provide a method and an apparatus for providing a file download service and a buffering system, which can relatively accurately judge uniqueness of a buffered file in the buffering system, thus providing the file download service to users according to a judgment result, saving storage space in the buffering system, and at the same time, reducing egress traffic and bandwidth consumption.

According to one aspect of the embodiments of the present invention, a method for providing a file download service is provided, where the method includes:
receiving a download request from a client, where the download request includes a target URL and information about a name of a file to be downloaded;
pre-obtaining part of bytes of the file to be downloaded from a target website according to the target URL and the information about the name of the file to be downloaded, which are in the download request, and a preset pre-obtaining rule;
obtaining a Hash value through performing Hash processing on the pre-obtained part of bytes of the file to be downloaded; and
providing the file to be downloaded for the client when a Hash value which is the same as the Hash value obtained through the Hash processing is found in a preset buffered file information list.

According to another aspect of the embodiments of the present invention, an apparatus for providing a file download service is provided, where the apparatus includes a receiving unit, an obtaining unit, a Hash unit, and a first processing unit, where: the receiving unit is configured to receive a download request from a client, where the download request includes a target URL and information about a name of a file to be downloaded; the obtaining unit is configured to pre-obtain part of bytes of the file to be downloaded from a target website according to the target URL and the information about the name of the file to be downloaded, which are in the download request, and a preset pre-obtaining rule; the Hash unit is configured to obtain a Hash value through performing Hash processing on the pre-obtained part of bytes of the file to be downloaded; and the first processing unit is configured to provide the file to be downloaded for the client when a Hash value which is the same as the Hash value obtained through the Hash processing is found in a preset buffered file information list.

According to another aspect of the embodiments of the present invention, a buffering system is provided, where the system includes: an apparatus for providing a file download service and N buffering servers, where N is a natural number, where: the apparatus for providing a file download service is configured to receive a download request from a client, pre-obtain part of bytes of a file to be downloaded from a target website according to a target URL and information about a name of the file to be downloaded, which are in the download request, and a preset pre-obtaining rule, obtain a Hash value through performing Hash processing on the pre-obtained part of bytes of the file to be downloaded, and redirect the download request to at least one buffering server when a Hash value which is the same as the Hash value obtained through the Hash processing is found in a preset buffered file information list, so as to provide the file to be downloaded for the client, where the download request includes the target URL and the information about the name of the file to be downloaded; and the buffering servers are configured to buffer the file to be downloaded.

It can be seen from the foregoing that, according to the technical solutions adopted in the embodiments of the present invention, the Hash value obtained through performing Hash processing on bytes of preset fields of a buffered file after combination is used as an identity of the buffered file in the buffering system, part of bytes of the file to be downloaded are pre-obtained from the target website according to the preset pre-obtaining rule when a file is downloaded, a corresponding Hash value is obtained through performing Hash processing on the pre-obtained part of bytes, the obtained Hash value is compared with Hash value information in the preset buffered file information list, and the file to be downloaded is provided for the client when a same Hash value is found in the preset buffered file information list. Compared with the manner of purely relying on the combination of a URL and a file name to judge the uniqueness of a buffered file in the buffering system, this method in which the manner of performing Hash processing on pre-obtained part of bytes of the file to be downloaded is used to judge whether the file to be downloaded is buffered in the buffering system is more accurate, thus effectively reducing the number of times for repeatedly downloading the file to be downloaded, saving the storage space in the buffering system, and at the same time, reducing the egress traffic and the bandwidth consumption.

### BRIEF DESCRIPTION OF THE DRAWINGS

To describe the technical solutions in the embodiments of the present invention clearly, accompanying drawings that need to be used in the description of the embodiments are briefly introduced below. Obviously, the accompanying drawings in the following description are merely some embodiments of the present invention. Those of ordinary skill in the art may further obtain other drawings according to these accompanying drawings without creative efforts.
FIG. 1 is a flowchart of a method for providing a file download service according to a first embodiment of the present invention;
FIG. 2 is a flowchart of a method for providing a file download service according to a second embodiment of the present invention;
FIG. 3 is a schematic diagram of an apparatus for providing a file download service according to a third embodiment of the present invention;
FIG. 4 is a schematic diagram of an apparatus for providing a file download service according to a fourth embodiment of the present invention; and
FIG. 5 is a schematic diagram of a buffering system according to a fifth embodiment of the present invention.

### DETAILED DESCRIPTION OF THE EMBODIMENTS

To make the objectives, features, and advantages of the present invention more obvious and easier to understand, the technical solutions in the embodiments of the present invention are described clearly and completely by combining the accompanying drawings in the embodiments of the present invention. Apparently, the embodiments to be described are merely part of rather than all of the embodiments of the present invention. Based on the embodiments of the present invention, all the other embodiments obtained by those of ordinary skill in the art without creative efforts shall fall within the protection scope of the present invention.

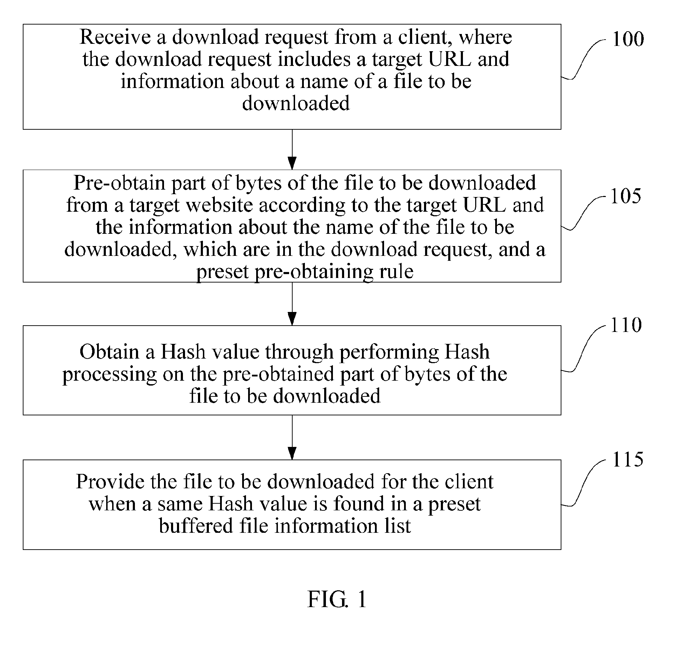

FIG. 1 is a flowchart of a method for providing a file download service according to a first embodiment of the present invention. As shown in FIG. 1, the method includes:
Step 100: Receive a download request from a client, where the download request includes a target URL and information about a name of a file to be downloaded.

Specifically, the download request includes a GET request sent by a user through an HTTP protocol, and the request includes information about a name of a file to be downloaded by the user and a URL of a target website.
Step 105: Pre-obtain part of bytes of the file to be downloaded from the target website according to the target URL and the information about the name of the file to be downloaded, which are in the download request, and a preset pre-obtaining rule.

Specifically, when the part of bytes of the file to be downloaded are pre-obtained from the target website, the file to be downloaded may be fragmented according to a preset pre-obtaining rule and a preset size, and then part of bytes of preset fields in the file to be downloaded are pre-obtained.
Step 110: Obtain a Hash value through performing Hash processing on the pre-obtained part of bytes of the file to be downloaded.

Specifically, the pre-obtained part of bytes may form a segment of data according to a set sequence, and Hash (HASH) processing may be performed on the segment of data to obtain a corresponding Hash value. It can be understood that Hash algorithms used for performing Hash processing include but are not limited to an MD5 algorithm and an SHA1 algorithm.
Step 115: Provide the file to be downloaded for the client when a Hash value which is the same as the Hash value obtained through the Hash processing is found in a preset buffered file information list.

Specifically, in the buffering system described in the embodiment of the present invention, a buffered file information list may be preset. This list includes Hash value information about a buffered file and corresponding buffering location information. The Hash value information includes a Hash value obtained through performing Hash processing on the buffered file according to bytes of preset fields, and the Hash value is used as an identity of the buffered file.

Specifically, the Hash value information in the buffered file information list is also obtained through performing Hash processing on part of bytes of the buffered file in the same location after fragmentation is performed on the buffered file according to the same preset size, and the used Hash algorithm is also the same. In other words, the manner for performing the Hash processing on the part of bytes of the buffered file in the buffering system is the same as the Hash processing manner on the pre-obtained bytes of the file to be downloaded at the target website.

When the Hash value which is the same as the Hash value obtained through the Hash processing is found in the preset buffered file information list, it may indicate that a corresponding file to be downloaded by the user is already buffered in the buffering system. The buffering system may provide the buffered file to be downloaded for intranet users for downloading, so as to meet HTTP download requirements of users, reduce egress traffic, and improve a download speed of users.

With the method for providing a file download service according to the embodiment of the present invention, the Hash value obtained through performing Hash processing on the bytes of preset fields of the buffered file after combination is used as an identity of the buffered file in the buffering system, part of bytes of the file to be downloaded are pre-obtained from the target website according to a preset pre-obtaining rule when a file is downloaded, a corresponding Hash value is obtained through performing Hash processing on the pre-obtained part of bytes, the obtained Hash value is compared with Hash value information in the preset buffered file information list, and the file to be downloaded is provided for the client when a same Hash value is found in the preset buffered file information list. Compared with the manner of purely relying on the combination of a URL and a file name to judge the uniqueness of a buffered file in the buffering system, this method in which the manner of performing Hash processing on pre-obtained part of bytes of the file to be downloaded is used to judge whether the file to be downloaded is buffered in the buffering system is more accurate, thus effectively reducing the number of times for repeatedly downloading the file to be downloaded, saving the storage space in the buffering system, and at the same time, reducing the egress traffic and bandwidth consumption.

To help better understand the technical solutions in the embodiments of the present invention, the following further describes the technical solutions of the present invention through more specific embodiments.

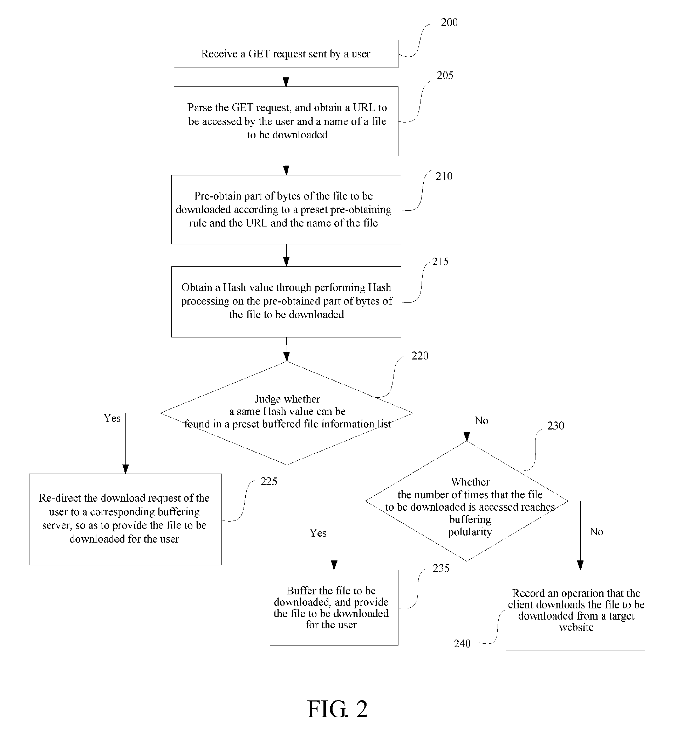

FIG. 2 is a flowchart of a method for providing a file download service according to a second embodiment of the present invention. As shown in FIG. 2, the method includes:
Step 200: Receive a GET request from a user, and proceed to step 205.

Specifically, the request includes a name of a file to be downloaded by a user and a URL of the target website.
Step 205: Parse the GET request, obtain the URL to be accessed by the user and the name of the file to be downloaded, and proceed to step 210.
Step 210: Pre-obtain part of bytes of the file to be downloaded from the target website according to a preset pre-obtaining rule and the URL and the name of the file, and proceed to step 215.

Specifically, the buffering system may pre-obtain part of bytes of the file to be downloaded from the target website according to the URL and the name of the file. When pre-obtaining part of bytes of the file to be downloaded from the target website, the buffering system may pre-obtain part of bytes of preset fields in the file to be downloaded after fragmenting the file to be downloaded according to a preset pre-obtaining rule and a preset size.

Specifically, when pre-obtaining the file to be downloaded from the target website, the buffering system may fragment the file according to a set size. For example, if the set size is 2 MB for each block and 128 KB for each fragment, and the file to be downloaded is 30 MB, during pre-obtaining, the buffering system may divide the file to be downloaded into 15 file blocks according to the size of 2 MB for each block, and fragment each file block according to the size of 128 KB for each fragment into 16 fragments. In this case, the buffering system may take out several bytes or an entire fragment from the different fragments of each file block of the file to be downloaded according to a set rule. It can be understood that there are many manners for pre-obtaining bytes of the file to be downloaded according to a set pre-obtaining rule. For example, several bytes of a first fragment in each file block may be pre-obtained, and certainly, bytes of other fragments in each file block may also be pre-obtained.
Step 215: Obtain a Hash value through performing Hash processing on the pre-obtained part of bytes of the file to be downloaded, and proceed to step 220.

Specifically, after pre-obtaining part of bytes of the file to be downloaded, the pre-obtained part of bytes may form a segment of data according to a set sequence, and Hash processing may be performed on the segment of data to obtain the Hash value. It can be understood that Hash algorithms used for performing Hash processing include but are not limited to an MD5 algorithm and an SHA1 algorithm.
Step 220: Judge whether a Hash value which is the same as the Hash value obtained through the Hash processing in step 215 can be found in a preset buffered file information list; if yes, proceed to step 225; otherwise, proceed to step 230.

Specifically, in the buffering system described in the embodiment of the present invention, a buffered file information list may be preset. This list includes Hash value information about a buffered file and corresponding buffering location information. The Hash value information includes a Hash value obtained through performing Hash processing on the buffered file according to bytes of preset fields, and the Hash value is used as an identity of the buffered file.

Specifically, the Hash value information pre-stored in the buffering system is also obtained through performing Hash processing on part of bytes in the same location after fragmentation is performed on the buffered file according to the same preset size, and the Hash algorithm is also the same. In other words, the manner for performing the Hash processing on the part of bytes of the buffered file in the buffering system is the same as the Hash processing manner on the pre-obtained bytes of the file to be downloaded.
Step 225: Re-direct the download request of the user to a corresponding buffering server, so as to provide the file to be downloaded for the user.

When a same Hash value is found in the preset buffered file information list, it may indicate that the corresponding file to be downloaded by the user is already buffered in the buffering system, and the buffering system may re-direct the download request of the client to the corresponding buffering server according to the buffering location information corresponding to the Hash value in the buffered file information list, so as to provide the file to be downloaded for the client, thus meeting HTTP download requirements of users, reducing egress traffic, and improving a download speed of users. It can be understood that there may be a plurality of buffering servers.
Step 230: Judge whether the file to be downloaded reaches set buffering popularity; if the buffering popularity is reached, proceed to step 235; otherwise, proceed to step 240.

When no same Hash value is found in the preset buffered file information list, it indicates that the file to be downloaded is not buffered in the buffering system. At this time, it may be further judged whether the number of times for accessing the file to be downloaded reaches the set buffering popularity. When the number of times for accessing the file to be downloaded reaches the set buffering popularity, proceed to step 235; otherwise, proceed to step 240.

The buffering popularity is a standard used to measure the file to be downloaded, where the file to be downloaded is buffered in the buffering system, and may be expressed by the number of access times. When the number of times that the file to be downloaded is accessed reaches the set number of access times, it indicates that the number of times that the file to be downloaded is accessed is large. In order to enable intranet users to quickly download the file to be downloaded, and save network resources, the buffering system may buffer a file, where the number of times for accessing the file reaches the buffering popularity (that is, the number of times that the file to be downloaded is accessed reaches the set number of access times), and then provides the buffered file for intranet users. Those skilled in the art can know that, to judge whether the number of times that the file to be downloaded is accessed reaches the buffering popularity, the number of times that the file to be downloaded is accessed may be obtained through recording. For example, a record table may be set to record the file to be downloaded by an intranet user and the number of times that this file is accessed.
Step 235: Buffer the file to be downloaded, and provide the file to be downloaded for the user at the same time.

Specifically, when the file to be downloaded reaches the set buffering popularity, that is, the number of times that the file to be downloaded is accessed reaches the set number of access times, a buffering server is instructed to download, according to the URL and the name of the file to be downloaded, the file to be downloaded from the target website for buffering, and the download request of the client is re-directed to the buffering server, so as to provide the file to be downloaded for the client, thus improving a download speed of the user, and saving network resources. Certainly, it can be understood that, at least one buffering server may exist in the buffering system. When a plurality of (at least two) buffering servers exist, one of the buffering servers may be instructed to download the file to be downloaded from the target website for buffering.

Further, after the buffering server downloads the file to be downloaded from the target website for buffering, the buffered file information list may be updated. Specifically, the file to be downloaded may be processed according to a preset Hash processing manner. After the file to be downloaded is fragmented according to a preset size, Hash processing is performed on part of bytes of a preset location, and the obtained Hash value and buffering location information of the file to be downloaded can be recorded in the buffered file information list.
Step 240: Record an operation that the client downloads the file to be downloaded from the target website.

Specifically, when the file to be downloaded does not reach the preset buffering popularity, that the user downloads the file to be downloaded from the target website is not affected, and this download operation of the user is recorded to update the buffering popularity of the file to be downloaded. For example, the number of times that the file to be downloaded is accessed may increase by 1, but the update modes are not limited to this method.

With the method for providing a file download service according to this embodiment of the present invention, the Hash value obtained through performing Hash processing on bytes of preset fields of a buffered file after combination is used as an identity of the buffered file in the buffering system. Compared with the manner of purely relying on the combination of a URL and a file name to judge the uniqueness of a buffered file in the buffering system, the method in which the manner of performing Hash processing on part of bytes of the file to be downloaded, where the part of bytes of the file to be downloaded are pre-obtained according to the preset pre-obtaining rule when a file is downloaded, is used to judge whether the file to be downloaded is buffered in the buffering system is more accurate, thus effectively reducing the number of times for repeatedly downloading the file to be downloaded, saving storage space in the buffering system, and at the same time, reducing egress traffic and bandwidth consumption, and at the same time, reducing egress traffic and bandwidth consumption.

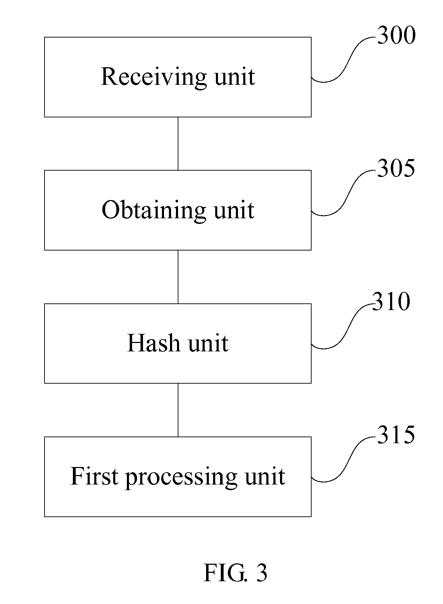

FIG. 3 is a schematic structural diagram of an apparatus for providing a file download service according to a third embodiment of the present invention. As shown in FIG. 3, the apparatus includes:

A receiving unit 300 is configured to receive a download request from a client, where the download request includes a target URL and information about a name of a file to be downloaded.

Specifically, the download request includes a GET request sent by a user through an HTTP protocol, and the request includes information about the name of the file to be downloaded by the user and a URL of a target website.

An obtaining unit 305 is configured to pre-obtain part of bytes of the file to be downloaded from the target website according to the target URL and the information about the name of the file to be downloaded, which are in the download request, and a preset pre-obtaining rule.

Specifically, when pre-obtaining the part of bytes of the file to be downloaded from the target website, the obtaining unit 305 may fragment the file to be downloaded according to a preset pre-obtaining rule and a preset size, and then pre-obtain the part of bytes of preset fields in the file to be downloaded.

Specifically, when pre-obtaining the file to be downloaded from the target website, the obtaining unit 305 may fragment the file according to a set size. For example, if the set rule is that 2 MB for each block and 128 KB for each fragment, and the file to be downloaded is 30 MB, during pre-obtaining, the buffering system may divide the file to be downloaded into 15 file blocks according to the size of 2 MB for each block, and fragment each file block according to the size of 128 KB for each fragment into 16 fragments. In this case, the obtaining unit 305 may take out several bytes or an entire fragment from the different fragments of each file block of the file to be downloaded according to a set rule. It can be understood that there are many manners for pre-obtaining bytes of the file to be downloaded according to a set rule. For example, several bytes of a first fragment in each file block may be pre-obtained, and certainly, bytes of other fragments in each file block may also be pre-obtained.

A Hash unit 310 is configured to obtain a Hash value through performing Hash processing on the pre-obtained part of bytes of the file to be downloaded.

Specifically, the Hash unit 310 may use the pre-obtained part of bytes to form a segment of data according to a set sequence, and perform Hash processing on the segment of data to obtain the Hash value. It can be understood that a Hash algorithm used during Hash processing includes but is not limited to an MD5 algorithm and an SHA1 algorithm.

A first processing unit 315 is configured to provide the file to be downloaded for the client when a Hash value which is the same as the Hash value obtained by the Hash unit is found in a preset buffered file information list.

Specifically, in the apparatus for providing a file download service described in the embodiment of the present invention, a buffered file information list may be preset. This list includes Hash value information about a buffered file and corresponding buffering location information. The Hash value information includes a Hash value obtained through performing Hash processing on the buffered file according to bytes of preset fields, and the Hash value is used as an identity of the buffered file.

Of course, those skilled in the art may know that, the Hash value information in the buffered file information list is also obtained through performing Hash processing on part of bytes of the buffered file in the same location after fragmentation is performed on the buffered file according to the same preset size, and the Hash algorithm is also the same. In other words, the manner for performing the Hash processing on the part of bytes of the buffered file in the buffering system is the same as the Hash processing manner on the pre-obtained bytes of the file to be downloaded at the target website.

It can be understood that the function of each functional module of the apparatus for providing a file download service described in this embodiment may be implemented according to the method in the first embodiment. For the specific implementation process, reference may be made to the relevant description in the first embodiment, and details are not repeatedly described here. Each functional module of the apparatus for providing a file download service described in the embodiment may be disposed on one or a plurality of devices. For example, the apparatus for providing a file download service described in this embodiment of the present invention may be a resource management server.

It can be seen from the foregoing that, with the apparatus for providing a file download service described in this embodiment, part of bytes in a corresponding location of the file to be downloaded is pre-obtained from the target website according to a preset pre-obtaining rule, Hash processing is performed on the pre-obtained part of bytes after combination, and then whether the file to be downloaded is buffered in the buffering system is judged by comparing an obtained Hash result with the Hash value information in the preset buffered file information list, thus providing the file to be downloaded for the client. Compared with an existing buffering system which purely relies on the combination of a URL and a file name to provide a buffering service to users, the apparatus effectively reduces the number of times for repeatedly downloading the file to be downloaded by the buffering system, saves storage space, and reduces egress traffic and bandwidth consumption.

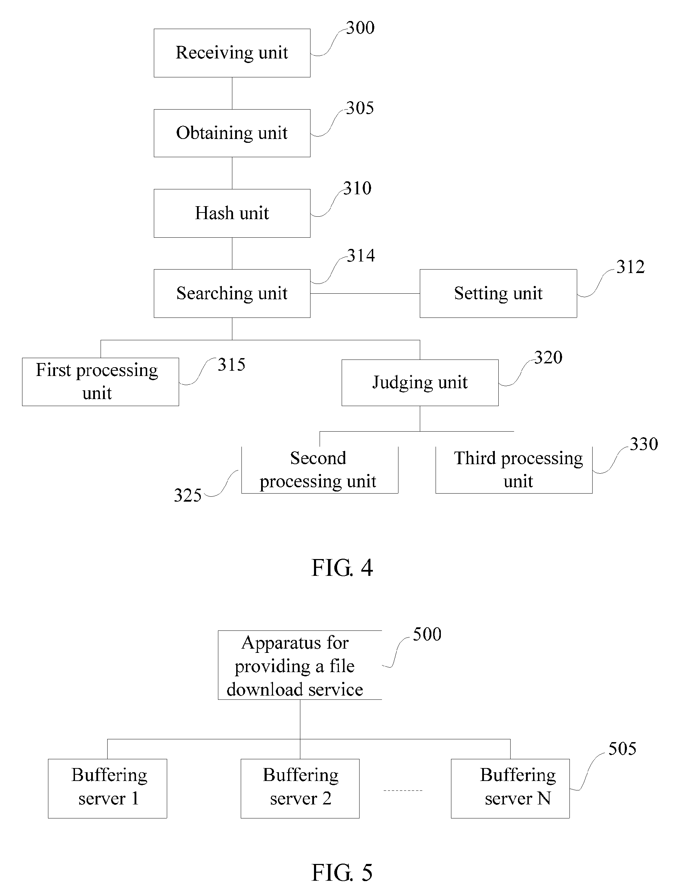

FIG. 4 is a schematic diagram of an apparatus for providing a file download service according to a fourth embodiment of the present invention. As shown in FIG. 4, on the basis of the apparatus embodiment described in FIG. 3, the apparatus in this embodiment of the present invention may further include:

A setting unit 312 is configured to set and update the buffered file information list according to the buffered file.

The first processing unit is specifically configured to: when a same Hash value is found in the preset buffered file information list, re-direct the download request of the client to a corresponding buffering server according to buffering location information corresponding to the Hash value to provide the file to be downloaded for the client.

Further, the apparatus for providing a file download service may further include:

A searching unit 314 is configured to search, according to the Hash value obtained by the Hash unit, the preset buffered file information list for a Hash value which is the same as the Hash value obtained by the Hash unit.

Specifically, when the searching unit 314 finds the same Hash value in the preset buffered file information list according to the Hash value obtained by the Hash unit, it indicates that the file to be downloaded is already buffered in the buffering system, and the first processing unit 315 is triggered. If no Hash value which is the same as the Hash value obtained by the Hash unit is found in the preset buffered file information list, it indicates that the file to be downloaded is not buffered in the buffering system. For the description about the buffered file information list, reference may be made to the foregoing method and apparatus embodiments, and details are not repeatedly described here.

Further, the apparatus for providing a file download service may further include:

A judging unit 320 is configured to judge whether the number of access times of the file to be downloaded reaches preset buffering popularity when no Hash value which is the same as the Hash value obtained by the Hash unit is found in the preset buffered file information list.

A second processing unit 325 is configured to: when a judging result of the judging unit 320 is that the number of access times of the file to be downloaded reaches the preset buffering popularity, instruct a buffering server to download the file to be downloaded from the target website for buffering, and provide the file to be downloaded for the client.

A third processing unit 330 is configured to record an operation that the client downloads the file to be downloaded from the target website when a judgment result of the judging unit 320 is that the number of access times of the file to be downloaded do not reach the preset buffering popularity.

The function of each functional module of the apparatus for providing a file download service described in this embodiment may be implemented according to the method in the second method embodiment. For the specific implementation process, reference may be made to the relevant description in the second method embodiment, and details are not repeatedly described here. Each functional module of the apparatus for providing a file download service described in the embodiment may be disposed on one or a plurality of devices.

With the apparatus for providing a file download service according to this embodiment, part of bytes in a corresponding location of the file to be downloaded are pre-obtained from the target website according to a preset pre-obtaining rule, Hash processing is performed on the pre-obtained part of bytes after combination, and then whether the file to be downloaded is buffered in the buffering system is judged by comparing an obtained Hash result with the Hash value information in the preset buffered file information list, thus determining whether to provide the file to be downloaded for the client. Compared with an existing buffering system that purely relies on the combination of a URL and a file name to provide a buffering service to users, the apparatus effectively reduces the number of times for repeatedly downloading the file to be downloaded by the buffering system, saves storage space, and reduces egress traffic and bandwidth consumption.

Further, an embodiment of the present invention further provides a buffering system. As shown in FIG. 5, the buffering system includes an apparatus for providing a file download service 500 and N buffering servers 505, where N is a natural number, where:

The apparatus for providing a file download service 500 is configured to: receive a download request from a client, pre-obtain part of bytes of a file to be downloaded from a target website according to a target URL and information about a name of the file to be downloaded and a preset pre-obtaining rule, obtain a Hash value through performing Hash processing on the pre-obtained part of bytes of the file to be downloaded, and when a Hash value which is the same as the Hash value obtained through the Hash processing is found in a preset buffered file information list, re-direct the download request to at least one buffering server 505, thus providing the file to be downloaded for the client, where the download request includes the target URL and the information about the name of the file to be downloaded.

The buffering server 505 is configured to buffer the file to be downloaded.

Specifically, for specific description about the apparatus for providing a file download service 500, reference may be made to the specific embodiments of the apparatus for providing a file download service in the foregoing embodiments, and details are not repeatedly described here.

With the buffering system provided in this embodiment of the present invention, the Hash value obtained through performing Hash processing on bytes of preset fields of a buffered file at a buffering server after combination is used as an identity of the buffered file in the buffering system. Compared with an existing buffering system that purely relies on the combination of a URL and a file name to judge uniqueness of a buffered file in the buffering system, the method in which the manner of performing Hash processing on part of bytes of the file to be downloaded, where the part of bytes of the file to be downloaded are pre-obtained according to the preset pre-obtaining rule when a file is downloaded, is used to judge whether the file to be downloaded is buffered in the buffering system, and further to provide a buffering service for the user is more accurate, thus effectively reducing the number of times for repeatedly downloading the file to be downloaded, saving storage space in the buffering system, and at the same time, reducing egress traffic and bandwidth consumption.

It should be noted that, for ease of description, the foregoing method embodiments are expressed as a series of action combinations. However, those skilled in the art should know that, the present invention is not limited to the described action sequences because some steps may use other sequences or be implemented synchronously according to the present invention. Secondly, those skilled in the art should also know that, all the embodiments described in the specification belong to exemplary embodiments, and the involved actions or modules are not certainly necessary to the present invention.

In the foregoing embodiments, the description of each embodiment has its focus. For those parts that are not described in an embodiment, reference may be made to the relevant descriptions in other embodiments.

Those of ordinary skill in the art may understand that all or part of the steps in each method of the foregoing embodiments may be implemented through a program instructing relevant hardware. The program may be stored in a computer readable storage medium, and the storage medium may includes a read-only memory (ROM, Read-Only Memory), a random access memory (RAM, Random Access Memory), a magnetic disk, or a compact disk.

A detection method, an apparatus and a detection system of a zombie network provided in the embodiments of the present invention are described in details. Several examples are adopted to describe the principles and implementation manners of the present invention. The description of the foregoing embodiments is merely used to help the understanding of the methods of the present invention and its core ideas; meanwhile, those of ordinary skill in the art can make various modifications and variations to the specific implementation manners and application scopes according to the ideas of the present invention. In summary, the content of the specification should not be constructed as limitations to the present invention.

## Claims

1. A method for providing a file download service, comprising:
receiving a download request from a client, wherein the download request comprises a target URL and information about a name of a file to be downloaded;
pre-obtaining part of bytes of the file to be downloaded from a target website according to the target URL and the information about the name of the file to be downloaded, which are in the download request, and a preset pre-obtaining rule;
obtaining a Hash value through performing Hash processing on the pre-obtained part of bytes of the file to be downloaded; and
providing the file to be downloaded to the client when a Hash value which is the same as the Hash value obtained through the Hash processing is found in a preset buffered file information list.

2. The method according to claim 1, further comprising:
judging whether the number of access times of the file to be downloaded reaches preset buffering popularity when no Hash value which is the same as the Hash value obtained through the Hash processing is found in the buffered file information list;
when the number of access times of the file to be downloaded reaches the preset buffering popularity, instructing a buffering server to download the file to be downloaded from the target website for buffering, and providing the file to be downloaded for the client; and
when the number of access times of the file to be downloaded do not reach the preset buffering popularity, recording an operation that the client downloads the file to be downloaded from the target website.

3. The method according to claim 1 or 2, wherein the preset buffered file information list comprises Hash value information about a buffered file and corresponding buffering location information, and
the providing the file to be downloaded to the client when a Hash value which is the same as the Hash value obtained through the Hash processing is found in the preset buffered file information list comprises:
when the Hash value which is the same as the Hash value obtained through the Hash processing is found in the preset buffered file information list, re-directing the download request of the client to a corresponding buffering server according to buffering location information corresponding to the Hash value, so as to provide the file to be downloaded for the client.

4. The method according to claim 3, wherein, the Hash processing comprises Hash processing through an MD5 algorithm and/or an SHA1 algorithm.

5. The method according to claim 1, wherein, the pre-obtaining the part of bytes of the file to be downloaded from the target website according to the preset pre-obtaining rule comprises:
taking out several bytes or an entire fragment from different fragments of each file block of the file to be downloaded according to a set rule.

6. The method according to claim 5, wherein, the Hash value in the preset buffered file information list is obtained through performing Hash processing on part in the same location of the file to be downloaded after fragmentation is performed on the buffered file according to a preset size, and a used Hash algorithm is the same.

7. An apparatus for providing a file download service, comprising:
a receiving unit, configured to receive a download request from a client, wherein the download request comprises a target URL and information about a name of a file to be downloaded;
an obtaining unit, configured to pre-obtain part of bytes of the file to be downloaded from a target website according to the target URL and the information about the name of the file to be downloaded, which are in the download request, and a preset pre-obtaining rule;
a Hash unit, configured to obtain a Hash value through performing Hash processing on the pre-obtained part of bytes of the file to be downloaded; and
a first processing unit, configured to provide the file to be downloaded for the client when a Hash value which is the same as the Hash value obtained by the Hash unit is found in a preset buffered file information list.

8. The apparatus according to claim 7, further comprising:
a setting unit, configured to set and update the buffered file information list according to a buffered file, wherein the preset buffered file information list comprises Hash value information about the buffered file and corresponding buffering location information;
the first processing unit is specifically configured to:
when the Hash value which is the same as the Hash value obtained by the Hash unit is found in the preset buffered file information list, re-direct the download request of the client to a corresponding buffering server according to the buffering location information corresponding to the Hash value to provide the file to be downloaded for the client.

9. The apparatus according to claim 7, further comprising:
a searching unit, configured to search, according to the Hash value obtained by the Hash unit, the preset buffered file information list for a Hash value which is the same as the Hash value obtained by the Hash unit.

10. The apparatus according to any one of claims 7 to 9, further comprising:
a judging unit, configured to judge whether the number of access times of the file to be downloaded reaches preset buffering popularity when no Hash value which is the same as the Hash value obtained by the Hash unit is found in the preset buffered file information list;
a second processing unit, configured to, when the number of access times of the file to be downloaded reaches the preset buffering popularity, instruct a buffering server to download the file to be downloaded from the target website for buffering, and provide the file to be downloaded for the client; and
a third processing unit, configured to, when the number of access times of the file to be downloaded do not reach the preset buffering popularity, record an operation that the client downloads the file to be downloaded from the target website.

11. A buffering system, comprising: an apparatus for providing a file download service and N buffering servers, wherein N is a natural number, wherein:
the apparatus for providing a file download service is configured to receive a download request from a client, pre-obtain part of bytes of a file to be downloaded from a target website according to a target URL and information about a name of the file to be downloaded, which are in the download request, and a preset pre-obtaining rule, obtain a Hash value through performing Hash processing on the pre-obtained part of bytes of the file to be downloaded, and when a Hash value which is the same as the Hash value obtained through the Hash processing is found in a preset buffered file information list, re-direct the download request to at least one buffering server, thus providing the file to be downloaded for the client, wherein the download request comprises the target URL and the information about the name of the file to be downloaded; and
the buffering server is configured to buffer the file to be downloaded.

12. The buffering system according to claim 9, wherein, the apparatus for providing a file download service comprises:
a receiving unit, configured to receive a download request from a client, wherein the download request comprises a target URL and information about a name of a file to be downloaded;
an obtaining unit, configured to pre-obtain part of bytes of the file to be downloaded from a target website according to the target URL and the information about the name of the file to be downloaded, which are in the download request, and a preset pre-obtaining rule;
a Hash processing unit, configured to obtain a Hash value through performing Hash processing on the pre-obtained part of bytes of the file to be downloaded;
a first processing unit, configured to provide the file to be downloaded for the client when a Hash value which is the same as the Hash value obtained by the Hash unit is found in a preset buffered file information list;
a judging unit, configured to judge whether the number of access times of the file to be downloaded reaches preset buffering popularity when no Hash value which is the same as the Hash value obtained by the Hash unit is found in the preset buffered file information list;
a second processing unit, configured to, when the number of access times of the file to be downloaded reaches the preset buffering popularity, instruct a buffering server to download the file to be downloaded from the target website for buffering, and provide the file to be downloaded for the client; and
a third processing unit, configured to, when the number of access times of the file to be downloaded do not reach the preset buffering popularity, record an operation that the client downloads the file to be downloaded from the target website.
